Europäisches Patentamt

European Patent Office

Office européen des brevets

(19)

(11) Publication number: **0 186 925**
**B1**

(12)     EUROPEAN PATENT SPECIFICATION

(45) Date of publication of patent specification: **14.09.88**

(51) Int. Cl.⁴: **C 02 F 3/02, B 01 D 53/00**

(21) Application number: **85202029.6**

(22) Date of filing: **06.12.85**

(54) Method for the biological purification of contaminated gases.

(30) Priority: **12.12.84 NL 8403773**

(43) Date of publication of application:
**09.07.86 Bulletin 86/28**

(45) Publication of the grant of the patent:
**14.09.88 Bulletin 88/37**

(84) Designated Contracting States:
**AT BE CH DE FR GB IT LI LU NL SE**

(56) References cited:
**DE-A-3 227 375**
**FR-A-2 374 070**

**Chem.-Ing.-Technik 56 (1984), Nr. 4, S. 279-286**

(73) Proprietor: **NEDERLANDSE CENTRALE ORGANISATIE VOOR TOEGEPAST-NATUURWETENSCHAPPELIJK ONDERZOEK**
**Juliana van Stolberglaan 148**
**NL-2595 CL The Hague (NL)**

(72) Inventor: **Don, Johannes Albertus**
**De Savorin Lohmanstraat 132**
**NL-3904 AW Veenendaal (NL)**

(74) Representative: **van der Beek, George Frans, Ir. et al**
**Nederlandsch Octrooibureau P.O. Box 29720**
**NL-2502 LS The Hague (NL)**

Courier Press, Leamington Spa, England.

## Description

The invention relates to a method for the biological purification of contaminated gases containing contaminants which are not or hardly water-soluble by means of one or more types of microorganism.

From Chem, Ing. Tech. 56 (1984) No. 4, pages 279—286 it is known that many types of microorganism are capable of converting numerous undesired components in air such as, in particular, intensely malodorous substances, into unobjectionable products. In view of the fact that the activity of organisms of this type is associated with water, such substances need to be transferred from the gas phase, to the aqueous medium of the microorganism. For the aerobic microbial conversion described in the said literature reference, apart from water, oxygen must additionally be present. As technical embodiments for the biological purification of, for example, waste gases from agriculture or industry respectively, the biofilter devices and also the biowashing devices are particularly mentioned.

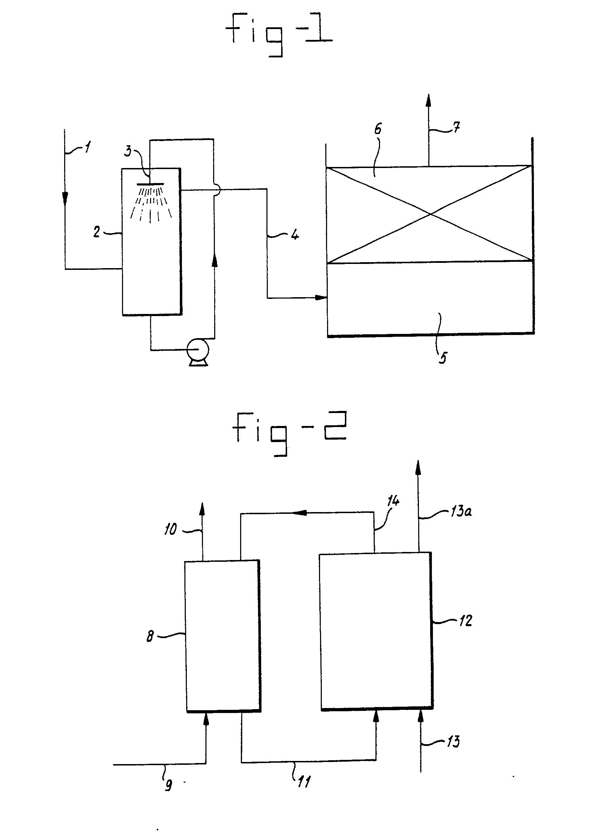

A biofilter may be depicted by Figure 1 in which (1) represents an inlet pipe for contaminated air, (2) a humidifying device for the contaminated air, (3) a spray device, (4) a pipe for the humidified contaminated air, (5) a pressure chamber or gravel bed, (6) a filter bed, for example of compost and/or peat, and (7) an outlet for the purified air. Apart from the advantages of a biofilter such as low running costs and a simple construction of the system, this system has a number of disadvantages such as large dimensions and a limited surface loading. In particular, biofilters normally have a large area, for example of 300—1,200 m$^2$ and a thickness of approximately 0.5—1 metre. The low surface loading of a biofilter is associated with the fall in pressure through the filter bed which because of energy costs should not be more than 100—200 mm of water column. Because of this the surface loading of the modern compost filters is approximately 100 m$^3$/m$^2$/hour. By using compost compounded in a special manner the surface loading can be increaed by a factor of 3—5.

To eliminate one of the disadvantages connected with the biofilters, in particular the bulkiness thereof, the biowash device has been developed. A device of this type may be represented by Figure 2 in which (8) represents a wash column, (9) an inlet pipe for contaminated air, (10) an outlet pipe for the purified air, (11) a pipe for the water loaded with contaminants, (12) an aeration vessel with an air inlet pipe (13) or outlet pipe (13a) respectively and (14) a pipe for purified water. A system of this type has, however, also disadvantages such as the occurrence of contamination of the packing in the wash column (8) by microorganisms, while at the same time the stability of the microorganisms in a system of this type leaves something to be desired. In addition, in the wash column (8) employing water only a limited rate of mass transfer is attained for numerous organic compounds such as toluene. Because of this the size of the wash column and also the rate of flow of the washing liquid should be considerable.

Further from German Offenlegungsschrift 3,227,375 a method is known for the purification of waste gases containing biologically degradable contaminants, which are slightly water-soluble. These contaminants are absorbed by a suspension of active sludge in water and broken down aerobically by microorganisms in the active sludge present in a vessel. For increasing the absorption capacity of achieving a buffer capacity for peak-loads 0.2—10 g of active charcoal per liter is added to the active sludge suspension after which the contaminants absorbed in the sludge or on active charcoal respectively are degraded aerobically. However, according to the method known from said German Offenlegungsschrift 3,227,375 the amount of contaminants to be adsorbed is limited to a maximum of a few grams per liter. This means that at very discontinuous emissions, for instance at the storage and transhipping of chemicals in tanks, a very large reservoir of active sludge is necessary. This also means that an optional anaerobical treatment is not considered applicable on account of the necessary heating to the optimum temperature of about 35°C. Further this also means that especially for an anaerobical conversion the danger of poisoning the microorganisms because of concentrations of dissolved, nonabsorbed compounds, being too high, can be considered a threat for the stability of the purification method.

It has been found that the disadvantages associated with the systems discussed above can be completely or largely eliminated if, in a first stage, the contaminated gas is brought into contact with an aqueous suspension containing 2—40% by weight of a biologically inert carrier material as sorbent which is optionally loaded with one or more types of microoganism, whereafter, in a second stage, the contaminants absorbed on the carrier material are broken down anaerobically, optionally preceded or followed by an aerobic fermentation.

The advantages of the system according to the invention comprising the anaerobical purification stage are the smaller sludge production and the decreased need for nutrients in respect to aerobical systems, further there is hardly any need for energy necessary for stirring etc. in the anaerobical purification of aqueous sludges, this contrary to aerobical systems. A further advantage in a number of cases is the production of methane. Another advantage of the invention is that the large amount of carrier material has a stabilizing action on the microorganisms.

Because of the open-bed structure of the first stage of the method according to the invention, it can be constructed in a compact manner from the technical point of view. Because of the low drop in pressure and the rapid mass transfer a surface loading of, for example, 5,000—10,000 m$^3$/m$^2$/hour can in principle be attained.

The second stage of the method according to the invention is a bioreactor in which the suspension loaded with contaminants is purified anaerobically. This stage can be preceded or followed by an aerobical stage. As an example of such a combination an aerobic conversion of $NH_3$ into $NO_3$- and subsequently an anaerobic conversion of the $NO_3$- obtained into $N_2$ may be mentioned.

Like the first stage, the second stage of the method according to the invention can also be constructed in a compact manner. Thus, in the aerobic purification, if used, the percentage of space taken up by air in the device according to the invention is much lower than in a biofilter known from the prior art a few per cent against 50). In addition, in the case of the invention, the quantity of inert material is small compared with the known biofilters. At the same time, a smaller floor area can be achieved because a greater installation height is possible. In a biofilter this is not achievable because the pressure drop through the filter rises too high and because of the resulting energy consumption. With discontinued emissions it is possible by using adsorbents to make do with a smaller biological reactor. For an emission duration of, for example, two hours per day, the biological reactor may be dimensioned twelve times smaller because outside the emission period the compounds stored in the adsorbents can be broken down further.

From the above it follows that the appliance necessary for the carrying out of the method according to the invention can be constructed from equipment common in the processing industry. As a result of this the biological purification according to the invention can be fitted into already existing industrial processing systems in a simple manner. Moreover, the invention has the advantage that specific microorganisms can be used so that it is possible to load carrier material with the said microorganism or microorganisms which give optimum results for a certain conversion. At the same time (in) organic compounds can be used as nutrients for the microorganisms concerned.

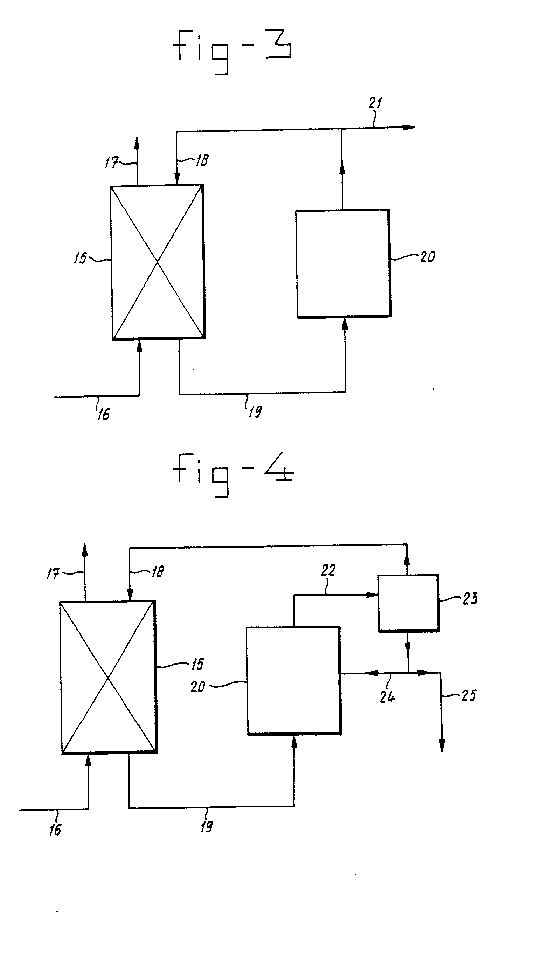

The method according to the invention can be carried out in a device according to Figure 3. In this device (15) represents a wash appliance (16) an inlet pipe for contaminated air, (17) an outlet pipe for the purified air, (18) an inlet pipe for the suspension of carrier optionally loaded with a microorganism, (19) an outlet pipe for the suspension of the carrier optionally loaded with a microorganism, (20) a biological reactor or reactor system and (21) a waste pipe. Via the waste pipe (21) a portion of the liquid is periodically released in order to prevent poisoining by accumulation of breakdown products. More particularly, the wash appliance (15) can be constructed in the form of, for example, a packed column (for example with a very open channel-type packing) or as a turbulance washing device. With regard to the biological reactor (20) it is emphasised that the latter can be operated both aerobically and anaerobically, and in addition, if required, may consist of several separate stages for the breakdown of various compounds which takes place under different conditions.

A preferred embodiment of the device shown in Figure 3 is depicted in Figure 4. In the said Figure 4 (15) to (20) incl. have the meanings stated in the discussion of Figure 3, and (22) represents a connecting pipe between reactor (20) and a separating device (23), (24) a return pipe from the separating device (23) to the reactor (20) and (25) a waste pipe. The separating device (23) is, for example, a settling tank or, advantageously, a hydrocyclone (system) from which a carrier optionally loaded with microorganisms is removed via pipe (18) and fluid with optionally loose microorganisms via pipe (24).

As examples of inert carrier materials to be used in the method according to the invention mention may be made of the inert carrier materials known from the prior art such as types of active charcoal, silica, alumina, zeolites, molecular sieves, metal oxides, sand and porous glass. The carrier materials are used, for example, in a quantity of 2—40% referred to the suspension.

The choice of the microorganisms in the method according to the invention is, on the one hand, dependent on the pervailing conditions, i.e. anaerobic or aerobic conditions, and on the other hand, on the desired reaction. More particularly, the following microorganisms may be used under anearobic conditions:

*Aerobacter hydrogenomonas*, varieties of *Clostridium*, varieties of *Methanospirillum*, varieties of *Methanobacter* and varieties of *Alkaligenes*.

Under aerobic conditions, for the breakdown of hydrocarbons various varieties of *Pseudomonas* and *Artrobacter* and moulds may be used, for the breakdown of sulphur compounds such as $H_2S$ and mercaptans—varieties of *Thiobacillus*, such as *Thiobacillus thiioxidans* and *Thiobacillus thioparus*, for the breakdown of nitrogen compounds such as $NH_3$ and amines—varieties of *Nitrobacter* and *Nitrosomonas*, and for the breakdown of chlorinated hydrocarbons, for example, varieties of *Pseudomonas, Arthrobacter, Acinetobacter, Rhodotorula* and *Aspergillus*. Often the carrier should be inoculated with a complex mixture of microorganisms such as active sludge from an aerobic or anaerobic water purification plant, percolation water from composting processes, biomass from the sludge fermentation of sewage water purification plants and/or extracts from methanogenic sediments.

Examples of waste gases to be purified are air loaded with (in)organic contaminants, for example originating from intensive livestock breeding, and also industrial waste gases which are contaminated, for example, with hydrocarbons such as toluene and the like. Another example of a gas to be purified is fermentation gas which contains, for example, 0.1—2% of $H_2S$. On burning an $H_2S$-containing fermentation gas of this type corrosion problems, in particular, occur in the combustion equipment.

In the method according to the invention a pH buffer is preferably used. For example, gases which are contaminated with nitrogen containing compounds are advantageously treated at a pH of 7—9 and gases which contain sulphur-containing contaminants advantageously at a pH of 2—4.

Since microorganisms are sensitive to toxic components in the contaminated gas it is advisable in such a case to subject the gases to be purified to a chemical pretreatment. For example, an excessive concentration of aldehydes may have a toxic effect on the microorganisms so that a mild chemical oxidation of the aldehydes to the corresponding acids is used with advantage.

If the purification according to the invention is only carried out anaerobically the microorganism used for the purification should, as a rule, be provided with a nutrient such as nitrate. For example, a nitrate addition of this type is used in the anaerobic purification of $H_2S$-containing fermentation gas, in which the following reaction occurs:

$$8NO_3-+5H_2S \rightarrow H_2SO_4+4N_2+4SO_42-+4H_2O$$

The last-named reaction can be carried out by a number of microorganisms such as *Thiobacillus denitrificans* and *Thiomicrospira denitrificans*. For the sake of completeness it is emphasised with respect to this last-named reaction that the $H_2SO_4$ obtained can be neutralised by means of a base such as $MgCO_3$, $CaCO_3$ or $Ca(OH)_2$.

The invention is explained in more detail by reference to the examples below, which should not, however, be interpreted as restrictive.

Example 1

During an operating time of 2,000 hours/year 120,000 m³/hour of waste gas with a toluene content of 330 mg/m³ and a temperature of 20°C was removed from a factory plant and fed to a device according to the invention.

The device according to the invention consisted, as shown in Figure 3, of a wash column (15) having a floor area of 30 m² and a height of 1 m. Water containing 15% by weight of active charcoal was used as suspension. The active charcoal was loaded with microorganisms by impregnation with percolation water from composted domestic refuse. The liquid/gas ratio in the wash column (15) was 2 kg/kg. The suspension loaded with contaminant was then fed to a bioreactor (20) which had a capacity of 60 m³ (vessel having a base area of 30 m² and a height of 2 m). As a result of the biological breakdown occurring in the bioreactor a removal efficiency of 75—95% was obtained.

The above device according to the invention occupied a floor area of 30 m² and had a height of approx. 5 m.

On comparing the dimensions of the device according to the invention described above with those of a biofilter known from the prior art having a layer thickness of 1 m which, with a surface loading of 300 m³/m²/hour should have an area of 400 m² for the processing of 120,000 m³/ hour, it can be deduced that the device according to the invention occupies a considerably smaller floor area (30 m² as against approx. 400 m²).

**Claims**

1. Method for the biological purification of a contaminated gas, the contaminants therein are not or hardly water-soluble, by means of one or more types of microorganism, characterised in that, in a first stage, the contaminated gas is brought into contact with an aqueous suspension containing 2—40% by weight of a biologically inert carrier material which is optionally loaded with one or more types of microorganism, whereafter, in a second stage, the contaminants adsorbed on the carrier material are broken down anaerobically, optionally preceded or followed by an aerobic fermentation.

2. Method according to Claim 1, characterised in that in the first stage the contaminated gas is passed counter-currently to the aqueous suspension of the biologically inert carrier material.

3. Method according to Claim 1 or 2, characterised in that active charcoal is used as carrier material.

4. Method according to one or more of Claims 1—3, characterised in that percolation water from composting processes, active sludge from an aerobic or anaerobic water purification plant, biomass from the sludge fermentation of sewage water purification plants and/or extracts from methanogenic sediments are used as sources of microorganisms.

5. Method according to one or more of Claims 1—4, characterised in that air loaded with (in)organic contaminants is used as contaminated gas.

6. Method according to one or more of Claims 1—5, characterised in that a gas contaminated with substances injurious to microorganisms is subjected to a chemical prepurification.

7. Method according to one or more of Claims 1—4, characterised in that $H_2S$-containing fermentation gas is used as contaminated gas.

8. Method according to one or more of Claims 1—7, characterised in that a suspension is used which contains (in)organic compounds as nutrient for the microorganisms.

9. Method according to one or more of Claims 1—8, characterised in that a pH buffer with a range of 7—9 is used for the treatment of gases which are contaminated with nitrogen-containing compounds.

10. Method according to one or more of Claims 1—8, characterised in that a pH buffer with a range of 2—4 is used for the treatment of gases which are contaminated with sulphur-containing compounds.

11. Device suitable for the biological purification of gases, comprising a wash appliance, a bioreactor, a separating device and the relevant connecting pipes, characterised in that the separating device is a hydrocyclone or hydrocyclone system.

## Patentansprüche

1. Verfahren zur biologischen Reinigung von verunreinigtem Gas, worin die Verunreinigungen nicht oder kaum wasserlöslich sind, mit Hilfe von einer oder mehreren Arten von Mikroorganismen, dadurch gekennzeichnet, daß in einer ersten Stufe das verunreinigte Gas in Kontakt mit einer wässrigen Suspension gebracht wird, die 2 bis 40 Gew.% eines biologisch inerten Trägermaterials enthält, das gegebenenfalls mit einer oder mehreren Arten von Mikroorganismen beladen ist, wonach in einer zweiten Stufe die an dem Trägermaterial adsorbierten Verunreinigungen anaerob zersetzt werden, gegebenenfalls mit vorangehender oder nachfolgender aerobischer Fermentierung.

2. Verfahren nach Anspruch 1, dadurch gekennzeichnet, daß in der ersten Stufe das verunreinigte Gas gegen den Strom der wässrigen Suspension des biologisch inerten Trägermaterials geführt wird.

3. Verfahren nach Anspruch 1 oder 2, dadurch gekennzeichnet, daß Aktivkohle als Trägermaterial verwendet wird.

4. Verfahren nach einem oder mehreren der Ansprüche 1 bis 3, dadurch gekennzeichnet, daß Stickerwasser aus Kompostierungsverfahren, aktive Aufschlämmungen von aeroben oder anaeroben Wasserreinigungsanlagen, Biomasse aus der Schlammfermentierung von Abwasserreinigungsanlagen und/oder Extrakte aus methanogenen Sedimenten als Mikroorganismusquelle verwandt werden.

5. Verfahren nach einem oder mehreren der Ansprüche 1 bis 4, dadurch gekennzeichnet, daß mit (an)organischen Verunreinigungen beladene Luft als verunreinigtes Gas verwandt wird.

6. Verfahren nach einem oder mehreren der Ansprüche 1 bis 5, dadurch gekennzeichnet, daß mit für die Mikroorganismen schädlichen Substanzen verunreinigtes Gas einer chemischen Vorreinigung unterworfen wird.

7. Verfahren nach einem oder mehreren der Ansprüche 1 bis 4, dadurch gekennzeichnet, daß H$_2$S-haltiges Fermentierungsgas als verunreinigtes Gas verwandt wird.

8. Verfahren nach einem oder mehreren der Ansprüche 1 bis 7, dadurch gekennzeichnet, daß eine Suspension verwandt wird, die (an)organische Verbindungen als Nährstoff für die Mikroorganismen enthält.

9. Verfahren nach einem oder mehreren der Ansprüche 1 bis 8, dadurch gekennzeichnet, daß ein pH-Puffer mit einem Bereich von 7 bis 9 bei der Behandlung von Gasen, die mit stickstoffhaltigen Verbindungen verunreinigt sind, verwandt wird.

10. Verfahren nach einem oder mehreren der Ansprüche 1 bis 8, dadurch gekennzeichnet, daß ein pH-Puffer mit einem Bereich von 2 bis 4 bei der Behandlung von Gasen, die mit schwefelhaltigen Verbindungen verunreinigt sind, verwandt wird.

11. Für die biologische Reinigung von Gasen geeignete Vorrichtung, die eine Wascheinrichtung, einen Bioreaktor, eine Trennvorrichtung und die wichtigen verbindenden Röhren umfaßt, dadurch gekennzeichnet, daß die Trennvorrichtung ein Hydrozyklon oder ein Hydrozyklonsystem ist.

## Revendications

1. Procédé de purification biologique d'un gaz pollué, les polluants étant peu ou pas du tout solubles dans l'eau au moyen d'un ou de plusieurs types de microorganismes caractérisé en ce que dans une prémiere étape, le gaz pollue est amené en contact avec une suspension aqueuse contenant 2—40% en poids d'un matériau de support biologiquement inerte qui est éventuellement porteur d'une ou de plusieurs sortes de microorganismes, aprés quoi, dans une secondé étape les polluants adsorbes sur la matériau de support sont détruits par voie anaerobie, eventuellement précédé ou suivi d'une fermentation aérobie.

2. Procédé selon la revendication 1, caractérisé en ce que dans la première étape, on fait passer le gaz pollué à contre-courant de la suspension aqueuse du matériau de support biologiquement inerte.

3. Procédé selon la revendication 1 ou 2, caractérisé en ce que comme matériau de support on utilise du charbon actif.

4. Procédé selon l'une ou plusieurs des revendications 1—3 caractérisé en ce que, comme source de microorganisme, on utilise de l'eau d'egouttage de procédes de compostage, des boues activées d'une usine de traitement d'eau par voie aérobie ou anaerobie, la biomasse provenant de la fermentation des boues d'usines de traitement d'eaux usées et/ou des extraits de sediments methanogénes.

5. Procédé selon l'une ou plusieurs des revendications 1—4 caractérisé en ce que de l'air chargé de polluants organiques ou inorganiques est utilisé comme gaz pollué.

6. Procédé selon l'une ou plusieurs des revendications 1—5, caractérisé en ce qu'un gaz pollue par des substances nocives pour les microorganismes est sousmis à une purification chimique préalable.

7. Procédé selon l'une ou plusieurs des revendications 1—4 caractérisé en ce qu'un gaz de fermentation contenant du H$_2$S est utilisé comme gaz pollué.

8. Procédé selon l'une ou plusieurs des revendications 1—7, caractérisé en ce qu'une suspension contenant des composes organiques ou minéraux est utilisée comme élement nutritif pour les microorganismes.

9. Procédé selon l'une ou plusieurs des revendications 1—8, caractérisé en ce qu'un tampon de pH dans la gamme de 7—9 est utilisé pour le traitement de gaz qui sont pollués par des composés contenant de l'azote.

10. Procédé selon l'une ou plusieurs des revendications 1—8, caractérisé en ce qu'un tampon de pH dans la gamme de 2—4 est utilisé pour le traitement de gaz qui sont pollués par des composés contenant du soufre.

11. Installation adaptée à la purification biologique des gaz comprenant un dispositif de lavage un bioréacteur un dispositif de séparation et les tuyauteries de raccordement nécessaires, caractérisé en ce que le dispositif de séparation est un hydrocyclone ou un système d'hydrocyclone.

Fig-1

Fig-2

# fig - 3

# fig - 4